# EUROPEAN PATENT SPECIFICATION

(11) **EP 0 713 651 B1**
(45) Date of publication and mention of the grant of the patent: **17.01.2001**
(21) Application number: 95118643.6
(22) Date of filing: 27.11.1995
(51) Int. Cl.: A23L 1/059, A23L 1/31, A23L 1/325, A23L 1/03

(54) **Food adhesive**
Bindemittel für Nahrung
Matériel adhésif pour l'industrie alimentaire

(30) Priority: 28.11.1994 JP 29297094
(43) Date of publication of application: 29.05.1996
(73) Proprietor: Ajinomoto Co., Inc., Tokyo 104 (JP)
(72) Inventor: Yasuyuki, Susa, c/o Food R&D Laboratories, Kawasaki-ku, Kawasaki-shi, Kanagawa-ken (JP); Tomoko, Sakai, c/o Food R&D Laboratories, Kawasaki-ku, Kawasaki-shi, Kanagawa-ken (JP); Takahiko, Soeda, c/o Food R&D Laboratories, Kawasaki-ku, Kawasaki-shi, Kanagawa-ken (JP)
(74) Representative: Strehl Schübel-Hopf & Partner

(56) References cited:
- EP-A- 0 572 987
- US-A- 5 156 956
- PATENT ABSTRACTS OF JAPAN vol. 017 no. 468 (C-1102) ,26 August 1993 & JP-A-05 115265 (SANZOU MANOU) 14 May 1993,

## Description

The present invention relates to a food adhesive which is used to produce a bonded food by using animal meat, meat of fishes and shellfishes, vegetables, or fruit as a starting material and bonding the same. Examples of the bonded food are processed foods such as processed fishes and shellfishes, processed meat, processed vegetables, and processed fruit.

### Prior Art

When a processed steak is produced by bonding, for example, animal meat, proteinaceous materials such as soybean protein and egg white, gums such as carrageenan and xanthan gum, and viscous polysaccharides such as agar and pectin have been used as a glue so far. However, these materials involve the following problems, and a multi-purpose adhesive that exhibits a high level of adhesion to all food materials has not been found.

The first problem is that since these adhesives have weak adhesion strength, the adhesion strength is not exhibited unless a large amount of the adhesive is used. The second problem is that since it is hard to adhere the adhesive to a surface of a material to be bonded uniformly without unevenness, unevenness of the adhesion occurs. The third problem is that the above-mentioned existing adhesives have more or less peculiar tastes and odors and especially when using a fresh material as a material to be bonded, these adhesives decrease the taste and flavor of the resulting bonded food. The existing adhesives do not exhibit sufficient adhesion strength unless the amount of the adhesives used is increased to some extent, so that the taste and flavor of the bonded food become an issue.

### Problems To Be Solved by the Invention

Under these circumstances, an object of the present invention is to provide an adhesive which, in a small amount, forms a uniform film on a surface of a product to be bonded in order to improve the taste and odor when bonding a food material and which can exhibit a sufficient adhesion strength, namely, in other words, a food adhesive which exhibits a sufficient adhesion strength and which does not involve problems regarding taste and odor.

### Means Taken for Solving the Problems

In order to solve the above-mentioned problems, it is necessary that the desired adhesive has a strong adhesion strength, and, since the adhesive is used in a small amount in view of the taste and the odor, that a thin film is formed on a food material and the adhesive is uniformly coated on the surface of the food material to be bonded.

The present inventors have focused on the use of a transglutaminase that catalyzes the formation of a protein crosslink to give a strong adhesion strength and on the use of finely divided silicon dioxide to improve the flowability of the powder. Consequently, they have created a technology for bonding and coating a thin layer, and have then found a food adhesive which exhibits good adhesion strength to almost all food materials, which exhibits excellent taste and flavor and which does not cause delamination of the bonded surface even when the bonded food is subjected to general heat-cooking such as boiling, roasting, frying, steaming or the like. This finding has led to the completion of the present invention. A food adhesive containing a transglutaminase and a protein as active ingredients has been already known (for example, EP-A-0572987). However, the food adhesive further containing finely divided silicon dioxide has not yet been known.

That is, the present invention firstly relates to a food adhesive comprising a transglutaminase, a protein powder and finely divided silicon dioxide as active ingredients.

The present invention will be described in detail below.

The food starting material to be bonded by the food adhesive of the present invention includes all food materials of animals and plants, such as animal meat, fish meat, shells, eggs, vegetables, and fruit. Examples of the animal meat include beef, pork, chicken, mutton, goat meat, and poultry. The kinds and portions of the animal meats are not particularly limited. These meats may be used singly or in combination. The fishes and shellfishes include not only fishes such as a teleost and a cartilaginous fish, but also shells, mollusks, crustaceans and fish eggs. Example thereof include a teleost such as Alaska pollack, Pacific saury, horse mackerel, sardine, bonito, salmon, pike conger, sea bream, sole, flatfish, hoki, croaker, threadfin bream and Pacific whiting; cartilaginous fishes such as shark and ray, crustaceans such as shrimp, crab and lobster; mollusks such as cuttlefish and octopus; and shells such as scallop and ear shell. The portions thereof to be bonded are not limited. These fishes and shellfishes, like the kinds of meat, may be used singly or in combination.

The finely divided silicon dioxide which is one of the active ingredients in the food adhesive of the present invention and which has not been hitherto employed in the technical field to which the present invention belongs will be, first of all, described below.

The finely divided silicon dioxide which is used in the present invention is silicon dioxide which serves to improve the flowability of a powder and which has a particle size by which one does not have an unpleasant rough feeling when eating a bonded food produced using the food adhesive of the present invention.

As the silicon dioxide, a fine powder of silicic anhydride such as marketed by Fuji Silysia Chemical Ldt. under the trade name of "Sylopage" can be mentioned. The use of the fine powder of silicic anhydride is permitted by the U.S. Food and Drug Administration (FDA) as an agent to prevent solidification. The fine powder of silicic anhydride contains 99% or more of SiO₂ and has usually a particle size of from 2 to 5 µm. The amount of the finely divided silicon dioxide is between 0.1% and 4%, preferably between 1% and 3% based on the total amount of the food adhesive. When it is less than 0.1%, the effect provided by the addition of the finely divided silicon dioxide is not given. Meanwhile, when it is more than 4%, the effect becomes fixed, and it makes no sense to increase the amount thereof.

Next, the protein powder which is the other active ingredient of the present invention is explained. This protein powder is used to exhibit a strong adhesion strength in a small amount in the interaction with the transglutaminase.

As the protein powder, a milk protein is preferable. The milk protein may be produced from a milk such as powder milk, casein, sodium caseinate, or calcium caseinate. The amount of the protein powder is between 30% and 90% based on the total amount of the food adhesive. It is said that approximately 70% is most preferable from the standpoint of both adhesion strength and adhesion amount. When the amount is less than 30%, the effect provided by the addition of the protein powder is not given. Meanwhile, when the amount is more than 90%, it is hard to adhere a thin layer, and the protein powder is undesirable adhered in a spherical state.

Finally, the transglutaminase which is the other active ingredient of the present invention is explained below.

The transglutaminase includes, as is well known, a calcium-independent transglutaminase and a calcium-dependent transglutaminase. Examples of the former include a transglutaminase derived from microorganisms [see, for example, Japanese Laid-Open Patent Application (Kokai) No. 27,471/1989: US Patent No. 5,156,956 which corresponds to Kokai No. 27,471/1989]. Examples of the latter include a transglutaminase derived from guinea pig liver [see Japanese second publication (Kokoku) No. 50,382/1989], a transglutaminase derived from fish [see, for example, Seki N. et al., "Journal of Japan Fishery Academy", vol. 56, No. 1, p. 125 (1990)], and a transglutaminase which is produced through gene recombination [see Japanese Laid-Open Patent Application (Kokai) Nos. 300,889/1989, 199,883/1993 and 225,775/1994: US Patent No. 5,420,025 which corresponds to Kokai No. 199,883/1993, European patent publication No. 0 555 649 which corresponds to Kokai No.225,775/1994 ]. Any of these transglutaminases can be used in the food adhesive of the present invention, and these are not limited by the source and process. However, in view of performance and economics, the calcium independent transglutaminase is preferable. For example, the transglutaminase derived from microorganisms [Japanese Laid-Open Patent Application (Kokai) No. 27,471/1989] satisfies all of the conditions, and it is said to be an optimum one at present.

The amount of the transglutaminase in the food adhesive of the present invention is between 1 unit and 500 units, preferably between 20 units and 100 units per gram of the food adhesive. When it is less than 1 unit, the adhesion strength is approximately the same as that of a control free from a transglutaminase. Meanwhile, when it is more than 500 units, the adhesion rate is too high, worsening workability. This food adhesive should be uniformly coated on a product to be bonded such as a meat or the like.

Assuming that the adhesion rate of the food adhesive to the material to be bonded in the present invention is approximately 0.7 g/100 cm², the amount of the transglutaminase is considered to be from 0.7 to 350 units per unit area (100 cm²) of the bonding surface of the material to be bonded. Naturally, the amount of the transglutaminase based on the material to be bonded is a tentative criterion, and it is not critical.

The unit of the transglutaminase activity in the present invention is measured and defined as follows. A reaction system containing benzyloxycarbonyl-L-glutamylglycine and hydroxylamine as substrates is reacted with the transglutaminase, and hydroxamic acid produced is transformed into an iron complex in the presence of trichloroacetic acid. Then, the absorbance at 525 nm is measured, and the amount of hydroxamic acid is calculated using a calibration curve. Thus, the activity is calculated [refer to the above-mentioned Japanese Laid-Open Patent Application (Kokai) No. 27,471/1989].

The food adhesive of the present invention may contain, besides the above-mentioned finely divided silicon dioxide, protein powder and transglutaminase as active ingredients to exhibit the adhesion, auxiliaries such as lactose and sodium polyphosphate, seasonings such as salt, pepper, sodium glutamate, sugar and protein hydrolyzate, emulsifying agents such as lecithin and monoglycerides, and other additives, as long as the adhesion of the active ingredients is not impaired; these additives can be used also as excipients.

The food adhesive of the present invention is easily prepared by using suitable amounts of these ingredients, and conducting simple powder mixing of these ingredients.

Of course, it is possible that the thus-prepared food adhesive is directly used to bond food materials. Also, the thus-prepared food adhesive may be distributed and sold as such.

The present invention secondarily relates to a process for producing a bonded food, which comprises bonding food materials using the above-mentioned food adhesive containing a transglutaminase, a protein powder and finely divided silicon dioxide.

This process will be explained in detail below.

First, the transglutaminase powder, the protein powder, the finely divided silicon dioxide and the additives which are added as required are taken up in suitable amounts, and these are mixed by means of a conical screw mixer or kneader.

The mixed powder is placed on a tray in a thickness of approximately 5 mm. A food material to be bonded is lightly placed on the powder in this state. Subsequently, the opposite surface of the food material is treated in the same manner. Some pieces of the thus-obtained food materials to which the powder of the food adhesive is adhered are packed into a casing tube or are laminated on a mold box.

The resulting food materials to be bonded are treated at a predetermined temperature for a predetermined period of time according to the purpose.

As is well known, transglutaminase is an enzyme that catalyzes an acyl transfer reaction of a γ-carboxyamide group of a glutamine residue in a peptide chain. When the transglutaminase is reacted with an -amino group of a lysine residue in a protein as an acyl receptor, an ε-(γ-glu)-Lys crosslink is formed in the molecule or between the molecules of the protein. When water serves as an acyl receptor, the transglutaminase catalyzes the reaction of deaminating the glutamine residue and transforming it into a glutamic acid residue.

Since the present invention makes use of the enzymatic activity of the transglutaminase, the above-mentioned predetermined temperature and time should be determined in consideration of the optimum conditions for the enzymatic reaction of the transglutaminase. That is, in the enzymatic reaction of the transglutaminase to bond the food materials of the present invention, the temperature is not lower than 0°C. However, when the temperature becomes too high, the enzyme is deactivated. Therefore, the temperature is generally between 0°C and 60°C. When it is required to treat the food materials rapidly in the production, the temperature is preferably between 20°C and 40°C. Meanwhile, when processing animal meats or fishes and shellfishes which are fresh food materials, the temperature is preferably between 0°C and 5°C whereby the food materials are kept fresh. The reaction time varies depending upon the reaction temperature. It is generally between 5 minutes and 15 hours.

The product obtained by the bonding through the food adhesive of the present invention (bonded food) can be distributed directly in the raw state or in the processed state by subsequently heating. It can be distributed in a shaped state, brought to a suitable size by, for example, a kitchen knife as required. When the product is a fish, it can be eaten as a raw fish or as a roasted, boiled or fried fish. When the product is an animal meat, it can be eaten as a steak or a fried meat.

### Examples

The present invention will be illustrated more specifically by referring to the following Examples. However, the technical scope of the present invention is not limited thereto.

### Example 1 (Adhesive)

Five types of food adhesives were produced according to recipes (a) to (e) shown in Table 1, and the effect of finely divided silicon dioxide was confirmed. At this time, a transglutaminase (specific activity 1 unit/mg) of a microorganism belonging to the genus Streptoverticillium (Streptoverticillium mobaraense IFO 13819) which is an actinomyces was used.

**Table 1**

| Recipe of adhesive | (a) wt.-% | (b) wt.-% | (c) wt.-% | (d) wt.-% | (e) wt.-% |
|---|---|---|---|---|---|
| transglutaminase | 4 | 4 | 4 | 4 | 4 |
| milk protein | 50 | 50 | 50 | 50 | 50 |
| lactose | 41 | 40 | 39 | 36 | 31 |
| sodium polyphosphate | 5 | 5 | 5 | 5 | 5 |
| finely divided silicon dioxide | 0 | 1 | 2 | 5 | 10 |

Each of these adhesives was placed on a tray in a fixed thickness. A roast pork which had been sliced to a fixed sectional area (approximately 100 cm²) was put thereon. At this time, the weight (g) of the adhesive adhered to the roast pork was measured, and calculated on the basis of the area (100 cm²). The calculated value was defined as an adhesion rate (g/100 cm²). At the same time, the uniform adhesion to the meat surface was also measured.

As a result, the adhesion rates (g/100cm²) were (a) 0.83, (b) 0.72, (c) 0.66, (d) 0.66 and (e) 0.65. The lower the value of the adhesion rate, the better the effect. This is because the adhesive can be adhered uniformly in the smaller amount. These results revealed that when the amount of the finely divided silicon dioxide was up to 2%, the effect of the adhesion of the bonded product was improved, but when it was more than 2%, the adhesion remained unchanged. With regard to the uniform adhesion to the meat which was measured at the same time, when no finely divided silicon dioxide was added, the adhesive was non-uniformly adhered to the meat surface. While, the adhesive having the finely divided silicon dioxide was uniformly adhered to the meat surface At this time, when the amount of the finely divided silicon dioxide was up to 2%, the effect of the adhesion was great, but when it was more than 2%, the effect of the adhesion remained unchanged.

Accordingly, it is found that in view of the effect and economics, the suitable amount of the finely divided silicon dioxide is approximately 2%.

### Example 2 (adhesion of an animal meat)

From among the recipes of the adhesives shown in Example 1, the recipe (c) in Table 1 was selected because the adhesion amount was most improved and this recipe was economical. The adhesion strength was then measured.

That is, the adhesive was uniformly spread (adhered) on a surface of a small piece (approximately 2 cm square) of a ham. The thus-obtained meat was packed in a casing having a folding width of 75 mm, tied and allowed to stand at room temperature for approximately 2 hours to conduct an enzymatic reaction by transglutaminase. Subsequently, the resulting product was kept overnight in a freezer of -40°C. The frozen product was sliced to a thickness of 9 mm and a width of 25 mm in the partially thawed state.

Immediately after the product was completely thawed, it was subjected to a tensile test using a rheometer manufactured by Fudo Kogyo K.K. As a result, the adhesion strength was as strong as 120 g/cm².

Also, this product in a partially thawed state was sliced to a thickness of from 10 to 12 mm in a steak form, and was subjected to a grilling test. Consequently, the product exhibited an excellent adhesion, and it kept the same quality as an unprocessed meat without impairment of the taste and flavor peculiar to the meat.

### Example 3 (Adhesion of a fish meat)

Approximately 1,000 g of slices (7 x 3 x 2cm) of a Spanish mackerel were prepared. The adhesive having the same recipe as is used in Example 2 was placed on a tray. Then, the adhesive was uniformly spread(adhered) on each slice of the Spanish mackerel. They were overlaid one over the other in a retainer without any clearance, and were pressure-bonded to one another. The bonded product was allowed to stand at room temperature for approximately 2 hours, then frozen and retained overnight.

When this product was thawed and then sliced to a thickness of from approximately 10 to approximately 15 mm, the bonding condition was excellent in a raw state. When this product was grilled, it kept the same quality as a slice of an unprocessed Spanish mackerel without delamination which was grilled. Further, the taste and flavor of this fish remained unchanged.

A coating was applied to the sliced fish, and the thus-coated fish was fried at from 170 to 180°C to obtain the fried fish. This fried fish kept the same quality as a fried fish obtained by frying a slice of an unprocessed Spanish mackerel.

This adhesive gave the same effect with the meat of another fish such as cod, salmon, flatfish or the like.

### Example 4 (Adhesion of an adductor of a scallop)

Approximately 500 g of adductors of raw scallops were prepared. The adhesive having the same recipe as used in Example 3 was placed on a tray. The adhesive was uniformly spread(adhered) on each adductor. The thus-treated adductors were packed in a fibrous casing having a folding diameter of 120 mm, tied, allowed to stand at room temperature for approximately 2 hours, and then retained overnight in a freezer of -40°C.

The resulting adductors were partially thawed, and then sliced to a size of from approximately 1.0 to 1.3 mm. The bonding condition of the thus-sliced adductors was excellent in the raw state. When the adductors were grilled, no delamination occurred, and the grilled product kept the same quality as a steak of an unprocessed scallop adductor.

### Effects of the Invention

The present invention provides a food additive which is adhered to a bonding surface of a food material such as animal meats, fish meats, shells, eggs, or vegetables with thin layer and which exhibits a strong adhesion strength in a small amount, as well as a bonded food produced by the food additive of the present invention is excellent in terms of taste and flavor.

## Claims

1. A food adhesive comprising a transglutaminase, a protein powder and finely divided silicon dioxide as active ingredients.

2. A food adhesive according to claim 1, wherein the protein powder is powder of a milk protein.

3. A food adhesive according to claim 1 or claim 2, wherein the finely divided silicon dioxide is present in an amount of 0.1 to 4 wt.-%, based on the total amount of the food adhesive.

4. A process for producing a bonded food, which comprises bonding food material by using a food adhesive according to any of the claims 1 to 3.

5. A bonded food, producible by using a food adhesive according to any of the claims 1 to 3.

## Patentansprüche

1. Bindemittel für Nahrung, enthaltend Transglutaminase, ein Proteinpulver und fein verteiltes Siliciumdioxid als aktive Bestandteile.

2. Bindemittel für Nahrung nach Anspruch 1, worin das Proteinpulver Pulver eines Milchproteins ist.

3. Bindemittel für Nahrung nach Anspruch 1 oder 2, worin das fein verteilte Siliciumdioxid in einer Menge von 0,1 bis 4 Gew.-%, bezogen auf die Gesamtmenge des Bindemittels für Nahrung, enthalten ist.

4. Verfahren zur Herstellung von gebundener Nahrung, welches das Binden von Nahrungsmaterial unter Einsatz eines Bindemittels für Nahrung nach einem der Ansprüche 1 bis 3 umfaßt.

5. Gebundene Nahrung, welche unter Einsatz eines Bindemittels für Nahrung nach einem der Ansprüche 1 bis 3 herstellbar ist.

## Revendications

1. Adhésif alimentaire comprenant comme principes actifs une transglutaminase, une poudre de protéine et du dioxyde de silicium finement divisé.

2. Adhésif alimentaire selon la revendication 1, dans lequel la poudre de protéine est de la poudre d'une protéine du lait.

3. Adhésif alimentaire selon la revendication 1 ou la revendication 2, dans lequel le dioxyde de silicium finement divisé est présent en une quantité de 0,1% à 4% en poids, ramenée à la quantité totale de l'adhésif alimentaire.

4. Procédé pour produire un produit alimentaire lié, comprenant la liaison de matière alimentaire en utilisant un adhésif alimentaire selon l'une quelconque des revendications 1 à 3.

5. Produit alimentaire lié pouvant être produit en utilisant un adhésif alimentaire selon l'une quelconque des revendications 1 à 3.
